# EUROPÄISCHE PATENTANMELDUNG

(11) **EP 4 585 392 A2**
(43) Veröffentlichungstag der Anmeldung: **16.07.2025**
(21) Anmeldenummer: 25150662.2
(22) Anmeldetag: 08.01.2025
(51) Int. Cl.: B29C 49/06, B29C 49/42, B29C 49/78, G01N 21/90, B29C 49/64, B29C 49/02, B29K 67/00, B29L 31/00

(54) **VORRICHTUNG UND VERFAHREN ZUM BEHANDELN VON KUNSTSTOFFVORFORMLINGEN**

(30) Priorität: 15.01.2024 DE 102024101047
(71) Anmelder: Krones AG, 93073 Neutraubling (DE)
(72) Erfinder: Geltinger, Florian, 93073 Neutraubling (DE)
(74) Vertreter: Bittner, Bernhard

(57) **Zusammenfassung**

Anordnung zum Behandeln von Kunststoffvorformlingen (10) mit einer Herstellungseinrichtung (5) zur Herstellung dieser Kunststoffvorformlinge, mit einer Transporteinrichtung (6), welche dazu geeignet und bestimmt ist, die hergestellten Kunststoffvorformlinge entlang eines vorgegebenen Transportpfads zu transportieren, mit einer ersten Inspektionseinrichtung (2) welche dazu geeignet ist, einen ersten Abschnitt der Kunststoffvorformlinge zu inspizieren, wobei diese erste Inspektionseinrichtung (2) wenigstens eine Bildaufnahmeeinrichtung (22) aufweist, welche dazu geeignet und bestimmt ist, ein ortsaufgelöstes Bild wenigstens dieses ersten Abschnitts der Kunststoffvorformlinge (10) aufzunehmen, dadurch gekennzeichnet, dass die Anordnung eine zweite Inspektionseinrichtung (4) aufweist, welche dazu geeignet und bestimmt ist, einen zweiten Abschnitt der Kunststoffvorformlinge (10) zu inspizieren, wobei diese zweite Inspektionseinrichtung (4) eine zweite Bildaufnahmeeinrichtung aufweist, welche dazu geeignet und bestimmt ist, ein ortsaufgelöstes Bild wenigstens des zweiten Abschnitts der Kunststoffvorformlinge (10) aufzunehmen.

## Beschreibung

Die vorliegende Erfindung bezieht sich auf eine Vorrichtung und ein Verfahren zum Behandeln und/oder Inspizieren von Kunststoffvorformlingen. Derartige Kunststoffvorformlinge werden im Stand der Technik verwendet, um zu Kunststoffbehältnissen und insbesondere Kunststoffflaschen umgeformt zu werden. Zu diesem Zweck werden erwärmte Kunststoffvorformlinge von einer Blasmaschine expandiert. Üblicherweise sind derartige Kunststoffvorformlinge Spritzgussteile, die in einer Spritzgießmaschine geformt werden. Aus dem Stand der Technik ist es bekannt, dass diese Kunststoffvorformlinge inspiziert werden, bevor sie dem Blasformprozess zugeführt werden.

Aus der WO 2018/036 857 ist ein Verfahren zur optischen Inspektion von Hohlkörpern bekannt, wobei die Hohlkörper, insbesondere Kunststoffvorformlinge, in einer gegenüber dem Spritzgießvorgang unveränderten relativen Lage zueinander inspiziert werden.

Aus der WO 2018/051 227 ist ebenfalls eine Vorrichtung zum Inspizieren von Kunststoffvorformlingen bekannt. Dabei ist ein Transportmittel vorgesehen, welches die Kunststoffvorformlinge transportiert sowie auch eine Inspektionseinrichtung, welche die Kunststoffvorformlinge inspiziert.

Aus der WO 2016/020683 ist ein optisches Inspektionssystem für Kunststoffvorformlinge bekannt.

Der vorliegenden Erfindung liegt die Aufgabe zugrunde, eine derartige Inspektion der hergestellten Kunststoffvorformlinge zu verbessern. Dies wird erfindungsgemäß durch die Gegenstände der unabhängigen Patentansprüche erreicht. Vorteilhafte Ausführungsformen und Weiterbildungen sind Gegenstand der Unteransprüche.

Die Erfindung bezieht sich auf eine Anordnung zum Behandeln von Kunststoffvorformlingen, wobei die Kunststoffvorformlinge dazu geeignet und bestimmt sind, zu Kunststoffbehältnissen umgeformt zu werden, und wobei diese Kunststoffvorformlinge einteilig ausgebildet sind und wenigstens einen Grundkörper und einen an diesem Grundkörper angeordneten Mündungsabschnitt aufweisen. Weiterhin weist diese Anordnung eine Herstellungseinrichtung zur Herstellung dieser Kunststoffvorformlinge auf und eine Transporteinrichtung, welche dazu geeignet und bestimmt ist, die hergestellten Kunststoffvorformlinge entlang eines vorgegebenen Transportpfads zu transportieren.

Weiterhin weist die Anordnung eine erste Inspektionseinrichtung auf, welche entlang des Transportpfads der Kunststoffvorformlinge angeordnet ist und welche dazu geeignet und bestimmt ist, einen ersten Abschnitt der Kunststoffvorformlinge zu inspizieren, wobei diese erste Inspektionseinrichtung wenigstens eine erste Bildaufnahmeeinrichtung aufweist, welche dazu geeignet und bestimmt ist, ein ortsaufgelöstes Bild wenigstens eines und insbesondere dieses ersten Abschnitts des Kunststoffvorformlings bzw. der Kunststoffvorformlinge aufzunehmen.

Erfindungsgemäß weist die Anordnung eine zweite Inspektionseinrichtung auf, welche bevorzugt ebenfalls entlang des Transportpfads der Kunststoffvorformlinge (d.h. des Transportpfads, entlang dessen die Transporteinrichtung die Kunststoffvorformlinge transportiert) angeordnet ist und welche dazu geeignet und bestimmt ist, einen zweiten Abschnitt des Kunststoffvorformlings oder der Kunststoffvorformlinge zu inspizieren, wobei diese zweite Inspektionseinrichtungen eine zweite Bildaufnahmeeinrichtung aufweist, welche dazu geeignet und bestimmt ist, ein ortsaufgelöstes Bild wenigstens eines und insbesondere des zweiten Abschnitts des Kunststoffvorformlings bzw. der Kunststoffvorformlinge aufzunehmen.

Es wird daher vorgeschlagen, dass die hergestellten Kunststoffvorformlinge mit einer ersten und einer zweiten Inspektionseinrichtung inspiziert werden, wobei hierzu insbesondere zwei unterschiedliche und insbesondere voneinander beabstandete Abschnitte der Kunststoffvorformlinge inspiziert werden. Bevorzugt handelt es sich bei dem ersten Abschnitt um einen Mündungsabschnitt der Kunststoffvorformlinge und bei dem zweiten Abschnitt um einen Bodenabschnitt der Kunststoffvorformlinge.

Bevorzugt sind die erste und die zweite Inspektionseinrichtung entlang des Transportpfads und/oder in der Transporteinrichtung der Kunststoffvorformlinge hintereinander und insbesondere unmittelbar hintereinander angeordnet.

Besonders bevorzugt weisen die erste und die zweite Inspektionseinrichtung und insbesondere die Bildaufnahmeeinrichtung der ersten Inspektionseinrichtung und zweite Inspektionseinrichtung und insbesondere die Bildaufnahmeeinrichtung der zweiten Inspektionseinrichtung in der Transportrichtung der Kunststoffvorformlinge einen Abstand zueinander auf, der geringer ist als 100cm, bevorzugt geringer als 80cm, bevorzugt geringer als 60cm, bevorzugt geringer als 50cm, bevorzugt geringer als 40cm, bevorzugt geringer als 30cm und bevorzugt geringer als 20cm.

Vorteilhaft handelt es sich bei der Herstellungseinrichtung um eine Spritzgießmaschine.

Bei einer weiteren vorteilhaften Ausführungsformen weist die Anordnung eine Kühleinrichtung zum Kühlen der hergestellten Kunststoffvorformlinge auf. Dabei ist es möglich, dass diese Anordnung einen teilweise oder vollständig umschlossenen Raum aufweist, in dem die Kunststoffvorformlinge wenigstens zeitweise angeordnet sind.

Einer weiteren vorteilhaften Ausführungsformen weist die Vorrichtung eine Überführungseinrichtung auf, um Kunststoffvorformlinge oder Gruppen von Kunststoffvorformlingen von der Herstellungseinrichtung zu der Transporteinrichtung zu überführen. Dabei ist es möglich, dass die Transporteinrichtung nahe an die Herstellungseinrichtung oder diesen Aufnahmeraum herangeführt wird und anschließend die Kunststoffvorformlinge in die Transporteinrichtung übergeben werden.

Weiterhin wäre es möglich, dass die Überführungseinrichtung beispielsweise wenigstens einen Greifer und insbesondere einen Vakuumgreifer aufweist, welche(r) die Kunststoffvorformlinge zu der Transporteinrichtung transportieren und/oder welche die Kunststoffvorformlinge in Aufnahmebereiche der Transporteinrichtung einsetzen. Bevorzugt ist diese Überführungseinrichtung derart ausgeführt, dass die Kunststoffvorformlinge zur Übergabe an die Transporteinrichtung wenigstens zeitweise in ihrer Längsrichtung bewegt werden.

Bei einer bevorzugten Ausführungsformen ist wenigstens eine der Bildaufnahmeeinrichtungen und sind bevorzugt beide Bildaufnahmeeinrichtungen stationär angeordnet. Bevorzugt transportiert damit die Transporteinrichtung die Kunststoffvorformlinge an der oder den Bildaufnahmeeinrichtungen vorbei.

Bei einer weiteren bevorzugten Ausführungsformen ist wenigstens eine Temperaturerfassungseinrichtung vorgesehen, welche dazu geeignet und bestimmt ist eine Temperatur Kunststoffvorformlinge zu bestimmen. Dabei ist es möglich, dass diese Temperaturerfassungseinrichtung eine Temperatur aller Kunststoffvorformlinge beispielsweise eine mittlere Temperatur bestimmt, es wäre doch auch möglich, dass diese Temperaturerfassungseinrichtung dazu geeignet und bestimmt ist, individuell die Temperaturen einzelner und bevorzugt aller einzelnen Kunststoffvorformlinge zu erfassen.

Bei einer weiteren bevorzugten Ausführungsformen sind die Bildaufnahmeeinrichtungen als Zeilenkameras oder Flächenkameras ausgeführt. Bevorzugt sind die Bildaufnahmeeinrichtungen dazu geeignet und bestimmt, ein Bild bzw. Bilder im sichtbaren Wellenlängenbereich aufzunehmen.

Bei einer weiteren vorteilhaften Ausführungsform ist wenigstens eine Bildaufnahmeeinrichtung und sind bevorzugt beide Bildaufnahmeeinrichtungen dazu geeignet und bestimmt, die besagten Bilder der Kunststoffvorformlinge während einer Bewegung der Kunststoffvorformlinge aufzunehmen.

Bei einer weiteren vorteilhaften Ausführungsformen weist die Transporteinrichtung eine Halteeinrichtung zum Halten der Kunststoffvorformlinge auf, wobei diese Halteeinrichtung bevorzugt dazu geeignet und bestimmt ist, eine Vielzahl von Kunststoffvorformlingen aufzunehmen. So kann beispielsweise diese Halteeinrichtung als Tray ausgebildet sein, welches dazu geeignet und bestimmt ist, viele Kunststoffvorformlinge, aber insbesondere vereinzelt aufzunehmen.

Bevorzugt weist die Halteeinrichtung eine Aufnahmefläche und insbesondere eine ebene Aufnahmefläche zur Aufnahme der Kunststoffvorformlinge auf, wobei bevorzugt diese Aufnahmefläche eine Vielzahl von Aufnahmeausnehmungen zur Aufnahme der Kunststoffvorformlinge aufweist. Bevorzugt sind diese Aufnahmeausnehmungen zueinander beabstandet und bevorzugt weisen dieses Aufnahmeausnehmungen zueinander einen Abstand auf, der größer ist als der halbe Durchmesser der Kunststoffvorformlinge und bevorzugt größer als der Durchmesser der Kunststoffvorformlinge. Auf diese Weise kann eine individuelle Inspektion der Kunststoffvorformlinge erleichtert werden.

Bei einer weiteren vorteilhaften Ausführungsform ist die Halteeinrichtung dazu geeignet und bestimmt, wenigstens 4, bevorzugt wenigstens 6, bevorzugt wenigstens 8, bevorzugt wenigstens 10, bevorzugt wenigstens 12, bevorzugt wenigstens 20, bevorzugt wenigstens 25, bevorzugt wenigstens 30 und bevorzugt wenigstens 50 Kunststoffvorformlinge aufzunehmen.

Bei einer weiteren Ausführungsformen ist die Halteeinrichtung dazu geeignet und bestimmt höchstens 300, bevorzugt höchstens 200 und bevorzugt höchstens 150 Kunststoffvorformlinge aufzunehmen.

Bei einer weiteren bevorzugten Ausführungsformen nimmt die Halteeinrichtung die Kunststoffvorformlinge derart auf, dass einige dieser Kunststoffvorformlinge, bevorzugt mehrere dieser Kunststoffvorformenlinge bevorzugt alle dieser Kunststoffvorformlinge parallel zueinander ausgerichtet sind. Besonders bevorzugt ist wenigstens ein Teil Kunststoffvorformlinge teilweise und bevorzugt sind alle Kunststoffvorformlinge in einer vertikalen Richtung angeordnet (während des Transports mit der Transporteinrichtung).

Bei einer weiteren vorteilhaften Ausführungsformen weist die Halteeinrichtung eine Vielzahl von Aufnahmeöffnungen auf, die in einem Array angeordnet sind. Besonders bevorzugt sind diese Aufnahmeöffnungen in zwei Richtungen angeordnet, die besonders bevorzugt senkrecht zueinander stehen.

Bei einer weiteren bevorzugten Ausführungsformen ist die Transporteinrichtung dazu geeignet und bestimmt, die Behältnisse in wenigstens zwei unterschiedliche Richtungen zu transportieren. Bevorzugt ist die Halteeinrichtung an der besagten Transporteinrichtung angeordnet.

So ist es möglich, dass die Transporteinrichtung die Kunststoffvorformlinge und/oder die Halteeinrichtungen in einer horizontalen Richtung fördert und bevorzugt auch in einer vertikalen Richtung.

Besonders bevorzugt transportiert die Transporteinrichtung jedoch die Kunststoffvorformlinge wenigstens abschnittsweise in einer geradlinigen Richtung. Besonders bevorzugt ist die Transporteinrichtung dazu geeignet und bestimmt, die Kunststoffvorformlinge in drei unterschiedlichen Richtungen zu transportieren, wobei bevorzugt zwei dieser drei Richtungen entgegengesetzt zueinander sind.

Beispielsweise ist ein Transport in einer vertikalen Richtung möglich, um die Kunststoffvorformlinge zu übernehmen und ein Transport in der horizontalen Richtung, um die Kunststoffvorformlinge an der oder den Inspektionseinrichtungen vorbei zu transportieren.

Besonders bevorzugt ist die Halteeinrichtung an einem Transportschlitten angeordnet, der wiederum angehoben und abgesenkt werden kann. Besonders bevorzugt sind besagten Richtungen senkrecht zueinander.

Bei der weiteren bevorzugten Ausführungsformen ist die Transporteinrichtung derart ausgebildet, dass die Inspektion der Kunststoffvorformenlinge während einer Bewegung und bevorzugt während einer Bewegung in genau einer Richtung stattfindet.

Besonders bevorzugt, weist Transporteinrichtung wenigstens eine Antriebseinrichtung und bevorzugt wenigstens zwei Antriebseinrichtungen auf. Bevorzugt ist dabei eine dieser Antriebseinrichtungen dazu geeignet und bestimmt, eine Hub der Halteeinrichtung in vertikaler Richtung zu bewirken. Bevorzugt ist eine dieser Antriebseinrichtungen dazu geeignet und bestimmt, eine Transport der Kunststoffvorformlinge in einer horizontalen Richtung zu bewirken.

Besonders bevorzugt sind diese Antriebseinrichtungen aus einer Gruppe von Antriebseinrichtung ausgewählt, welche hydraulische Antriebe, pneumatische Antriebe und insbesondere elektromotorische Antriebe aufweist.

Besonders bevorzugt ist eine elektromotorische Antriebseinrichtung vorgesehen, um eine Bewegung Kunststoffvorformlinge in einer horizontalen Richtung zu bewirken. Bevorzugt ist eine elektromotorische Antriebseinrichtung vorgesehen, um eine Bewegung der Kunststoffvorformlinge in einer vertikalen Richtung zu bewirken.

Besonders bevorzugt ist eine Hubhöhe, in welcher die Transporteinrichtung und/oder die Halteeinrichtung bewegt werden kann, einstellbar. Auf diese Weise ist eine Einstellung auf unterschiedliche Längen der Kunststoffvorformlinge möglich.

Bei einer weiteren vorteilhaften Ausführungsformen weist die Anordnung eine Ausschleuseeinrichtung auf, welche dazu geeignet und bestimmt ist, einzelne Kunststoffvorformlinge, insbesondere in Abhängigkeit von einem Inspektionsergebnis der Inspektion mit wenigstens einer Inspektionseinrichtung insbesondere und insbesondere der Inspektion mit der ersten Inspektionseinrichtung und/oder der zweiten Inspektionseinrichtung auszuschleusen.

Unter einen Ausschleusen wird verstanden, dass einzelne Kunststoffvorformlinge aus einem normalen Produktionsablauf ausgeschleust und/oder entsorgt werden. Diese Kunststoffvorformlinge werden daher nicht weiterverarbeitet.

Bei einer weiteren bevorzugten Ausführungsformen weist die Anordnung eine Steuerungseinrichtung auf, welche wenigstens ein Steuersignal ausgibt, welches bewirkt, dass ein einzelner oder eine Gruppe von Kunststoffvorformlinge ausgeschleust wird.

Beispielsweise ist es möglich, dass einzelne oder Anteile der Kunststoffvorformlinge beispielsweise mittels Vakuumgreifern aus der Transporteinrichtung entnommen werden. Es wäre doch umgekehrt auch möglich, dass Kunststoffvorformlinge, welche als intakt bewertet wurden entnommen und der weiteren Verarbeitung zugeführt werden.

Generell werden bevorzugt intakte Kunststoffvorformlinge, also Kunststoffvorformlinge, welche von beiden Inspektionseinrichtungen als intakt angesehen wurden, der weiteren Verarbeitung zugeführt. Beschädigte Kunststoffvorformlinge hingegen werden bevorzugt ausgeschleust.

Es ist aber auch möglich, dass Kunststoffvorformlinge individuell ausgesondert oder weiterverarbeitet werden.

Wie oben erwähnt, ist es dabei möglich, dass die Auschleuseeinrichtung eine Greifeinrichtung aufweist, welche dazu geeignet und bestimmt ist, einzelne Kunststoffvorformlinge zugreifen. Es wäre doch auch denkbar, dass die Halteeinrichtung und/oder die Transporteinrichtung selbst so ausgestaltet ist, dass sie zur Auslösung und/oder Ausschleusung einzelner Kunststoffvorformlinge geeignet ist. So könnten beispielsweise die Aufnahmeöffnungen an der Halteeinrichtung der Transporteinrichtung einen veränderbaren Querschnitt aufweisen, sodass bewirkt werden kann, dass einzelne Kunststoffvorformlinge durch die Halteeinrichtungen hindurch fallen.

Auch die Halteeinrichtung kann derart ausgestaltet sein, dass sie geeignet ist, sämtliche Kunststoffvorformlinge herabfallen zu lassen. Beschädigte Kunststoffvorformlinge könnten. vor diesem Vorgang beispielsweise mit Vakuumgreifern oder anderen Greifern entnommen werden.

Bevorzugt ist die Transporteinrichtung dazu geeignet, die Halteeinrichtung in einer ersten Richtung und insbesondere in einer horizontalen Richtung zwischen einer ersten Position, in welcher Kunststoffvorformlinge an die Transporteinrichtung übergebbar sind und einer zweiten Richtung, in der Kunststoffvorformlinge von der Transporteinrichtung abgebbar sind, zu transportieren.

Besonders bevorzugt ist die Transporteinrichtung dazu geeignet und bestimmt, die Kunststoffvorformlinge in der ersten Position in einer zweiten Richtung und insbesondere einer vertikalen Richtung zu bewegen (d.h. insbesondere zu Heben und/oder zu senken).

Besonders bevorzugt ist die Transporteinrichtung dazu geeignet und bestimmt, die Kunststoffvorformlinge in der zweiten Position in einer zweiten Richtung und insbesondere einer vertikalen Richtung zu bewegen (d.h. insbesondere zu Heben und/oder zu senken).

Die vorliegende Erfindung ist weiterhin auf eine Inspektionseinrichtung zum Inspizieren von Kunststoffvorformlingen gerichtet, wobei die Kunststoffvorformlinge dazu geeignet und bestimmt sind, zu Kunststoffbehältnissen umgeformt zu werden, und wobei diese Kunststoffvorformlinge einteilig ausgebildet sind und wenigstens einen Grundkörper und einen an diesem Grundkörper angeordneten Mündungsabschnitt aufweisen. Diese Inspektionseinrichtung weist weiterhin eine Transporteinrichtung auf, welche dazu geeignet und bestimmt ist, die hergestellten Kunststoffvorformlinge entlang eines vorgegebenen Transportpfads zu transportieren.

Weiterhin weist die Vorrichtung eine erste Inspektionseinrichtung auf, welche entlang des Transportpfads (der Kunststoffvorformlinge) angeordnet ist und welche dazu geeignet und bestimmt ist, einen ersten Abschnitt der Kunststoffvorformlinge (und insbesondere einen Abschnitt des Mündungsabschnitts) zu inspizieren, wobei diese erste Inspektionseinrichtung wenigstens eine Bildaufnahmeeinrichtung aufweist, welche dazu geeignet und bestimmt ist. ein ortsaufgelöstes Bild wenigstens eines Abschnitts und bevorzugt dieses ersten Abschnitts des Kunststoffvorformlings oder der Kunststoffvorformlinge aufzunehmen.

Erfindungsgemäß weist der Inspektionsvorrichtung eine zweite Inspektionseinrichtung auf, welche dazu geeignet und bestimmt ist, einen zweiten Abschnitt des oder der Kunststoffvorformlinge zu inspizieren, wobei diese zweite Inspektionseinrichtungen eine zweite Bildaufnahmeeinrichtung aufweist, welche dazu geeignet und bestimmt ist, ein ortsaufgelöstes Bild wenigstens eines weiteren Abschnitts und insbesondere des zweiten Abschnitts des oder der Kunststoffvorformlinge aufzunehmen.

Bei einer weiteren bevorzugten Ausführungsformen weist die erste Inspektionseinrichtung wenigstens zwei und bevorzugt eine Vielzahl von Bildaufnahmeeinrichtungen auf, welche jeweils dazu geeignet und bestimmt sind, wenigstens ein Bild wenigstens ein eines und insbesondere des ersten Abschnitts, der von der Transporteinrichtung transportierten Kunststoffvorformlinge aufzunehmen.

Bei einer weiteren bevorzugten Ausführungsform ist eine Bildaufnahmeeinrichtung der ersten Inspektionseinrichtung genau einer Bildaufnahmeeinrichtung der zweiten Inspektionseinrichtung derart zugeordnet, dass diese beiden Bildaufnahmeeinrichtungen jeweils den gleichen Kunststoffvorformling inspizieren bzw. alle Kunststoffvorformlinge inspizieren, die von der Transporteinrichtung in einer bestimmten Transportgasse transportiert werden.

Bei einer weiteren bevorzugten Ausführungsformen weist die zweite Inspektionseinrichtung eine Vielzahl von Bildaufnahmeeinrichtungen auf, welche jeweils dazu geeignet und bestimmt sind, wenigstens ein Bild eines Abschnitts und insbesondere des zweiten Abschnitts der von der Transporteinrichtung transportierten Kunststoffvorformlinge aufzunehmen.

Besonders bevorzugt weist die erste Inspektionseinrichtung wenigstens 2, bevorzugt wenigstens 4, bevorzugt wenigstens 6 und besonders bevorzugt wenigstens 8 Bildaufnahmeeinrichtungen auf.

Besonders bevorzugt weist die zweite Inspektionseinrichtung wenigstens 2, bevorzugt wenigstens 4, bevorzugt wenigstens 6 und besonders bevorzugt wenigstens 8 Bildaufnahmeeinrichtungen auf.

Bevorzugt ist dabei jede Bildaufnahmeeinrichtung der ersten Inspektionseinrichtung und/oder der zweiten Inspektionseinrichtung wenigstens einem und bevorzugt genau einem der Kunststoffvorformlinge, der von der Transporteinrichtung transportiert wird, zugeordnet.

Bei einer weiteren vorteilhaften Ausführungsformen sind diese Bildaufnahmeeinrichtungen in einer Reihe angeordnet. Besonders bevorzugt verläuft diese Reihe senkrecht zu dem Transportfahrt der Kunststoffvorformlinge.

Bei einer weiteren bevorzugten Ausführungsformen weist die erste und/oder die zweite Inspektionseinrichtung höchstens 50, bevorzugt höchstens 40 bevorzugt höchstens 30 und bevorzugt höchstens 20 Bildaufnahmeeinrichtungen auf.

Besonders bevorzugt ist, die wenigstens eine Bildaufnahmeeinrichtung der ersten Inspektionseinrichtung oberhalb des Transportpfads der Kunststoffvorformlinge angeordnet.

Bei einer weiteren bevorzugten Ausführungsform ist die wenigstens eine Bildaufnahmeeinrichtung der zweiten Inspektionseinrichtung oberhalb des Transportpfads der Kunststoffvorformlinge angeordnet.

Besonders bevorzugt findet daher sowohl die erste als zweite Inspektion der Kunststoffvorformlinge von oben bzw. in Richtung der Mündung der Kunststoffvorformlinge statt.

Bei einer weiteren bevorzugten Ausführungsformen weist wenigstens eine Inspektionseinrichtung eine Beleuchtungseinrichtung zum Beleuchten der von der Transporteinrichtung transportierten Kunststoffvorformlinge auf. Besonders bevorzugt weisen beide Inspektionseinrichtungen jeweils wenigstens eine Beleuchtungseinrichtung und insbesondere eine Vielzahl von Beleuchtungseinrichtungen zum Beleuchten der Kunststoffvorformlinge auf.

Besonders bevorzugt ist eine Vielzahl von Beleuchtungseinrichtungen vorgesehen, wobei besonders bevorzugt diese Beleuchtungseinrichtung jeweils einer Bildaufnahmeeinrichtung und/oder einem bestimmten von der Transporteinrichtung transportierten Kunststoffvorformling zugeordnet ist.

Besonders bevorzugt weist wenigstens eine Beleuchtungseinrichtung und weisen bevorzugt mehrere Beleuchtungseinrichtungen jeweils Blitzlampen auf. Dabei ist es möglich, dass diese Beleuchtungseinrichtungen mit den Bildaufnahmeeinrichtungen synchronisiert und oder getriggert sind.

Bei einer weiteren bevorzugte Ausführungsform ist wenigstens eine Beleuchtungseinrichtung der ersten Inspektionseinrichtung und/oder der zweiten Inspektionseinrichtung in ihrer Position und insbesondere in der vertikalen Richtung verstellbar. Auf diese Weise kann eine Anpassung an unterschiedliche Längen von Kunststoffvorformlingen erreicht werden. Bevorzugt sind alle Beleuchtungseinrichtungen der ersten Inspektionseinrichtungen und/oder alle Beleuchtungseinrichtungen der zweiten Inspektionseinrichtung in ihrer Position und insbesondere in der vertikalen Richtung verstellbar.

Bei einer weiteren bevorzugten Ausführungsformen weist die Vorrichtung eine Positionserfassungseinrichtung auf, welche eine Position der Kunststoffvorformlinge und oder der Halteeinrichtung, welche die Kunststoffvorformlinge hält erfasst. So können beispielsweise Lichtschranken vorgesehen sein, welche diese Position erfassen. Es wäre jedoch auch möglich, diese Position aus einem Antrieb der Transporteinrichtung beispielsweise einem servomotorischen Antrieb zu erfassen.

Bei einer weiteren bevorzugten Ausführungsform weist die Inspektionsvorrichtung eine Steuerungseinrichtung auf, welche wenigstens eine Bildaufnahmeeinrichtung und besonders bevorzugt mehrere Bildaufnahmeeinrichtungen und bevorzugt alle Bildaufnahmeeinrichtungen der ersten Inspektionseinrichtung in Abhängigkeit von einer (insbesondere von der Positionserfassungseinrichtung) erfassten Position der zu inspizierenden Kunststoffvorformlinge steuert.

Bei einer weiteren bevorzugten Ausführungsform weist die Inspektionsvorrichtung eine Steuerungseinrichtung auf, welche wenigstens eine Bildaufnahmeeinrichtung und besonders bevorzugt mehrere Bildaufnahmeeinrichtungen und bevorzugt alle Bildaufnahmeeinrichtungen der zweiten Inspektionseinrichtung in Abhängigkeit von einer (insbesondere von der Positionserfassungseinrichtung) erfassten Position der zu inspizierenden Kunststoffvorformlinge steuert.

Bei einer weiteren bevorzugten Ausführungsformen ist eine Beleuchtungseinrichtung, bevorzugt mehrere Beleuchtungseinrichtungen und sind bevorzugt alle Beleuchtungseinrichtungen stationär angeordnet. Bevorzugt ist wenigstens eine der Bildaufnahmeeinrichtungen (der ersten und/oder der zweiten Inspektionseinrichtung) stationär angeordnet. Besonders bevorzugt sind mehrere Bildaufnahmeeinrichtungen stationär angeordnet.

Bei einer weiteren vorteilhaften Ausführungsformen ist wenigstens eine der ersten Inspektionseinrichtung zugeordnete Beleuchtungseinrichtung oberhalb des Transportpfads der Kunststoffvorformlinge angeordnet und wenigstens eine der zweiten Inspektionseinrichtung zugeordnete Beleuchtungseinrichtung ist unterhalb des Transportpfads der Kunststoffvorformlinge angeordnet.

Besonders bevorzugt ist die erste Inspektionseinrichtung dazu geeignet und bestimmt, den Mündungsbereich der Kunststoffvorformlinge zu inspizieren. Besonders bevorzugt ist die zweite Inspektionseinrichtung dazu geeignet und bestimmt einen Bodenbereich der Kunststoffvorformlinge zu inspizieren.

Besonders bevorzugt ist die erste Inspektionseinrichtung dazu geeignet und bestimmt, die Kunststoffvorformlinge im Auflichtverfahren zu inspizieren. Besonders bevorzugt ist zweite Inspektionseinrichtung dazu geeignet und bestimmt, die Kunststoffvorformlinge in einem Durchlichtverfahren zu inspizieren.

Besonders bevorzugt weist die Vorrichtung eine Steuerungseinrichtung zum Ansteuern der ersten und/oder der zweiten Beleuchtungseinrichtungen auf. Besonders bevorzugt ist diese Steuerungseinrichtung derart ausgeführt, dass die ersten und zweiten Beleuchtungseinrichtungen zeitversetzt die Kunststoffvorformlinge beleuchten.

Bevorzugt weist die Vorrichtung eine erste Vergleichseinrichtung auf, welche von einer Bildaufnahmeeinrichtung der ersten Inspektionseinrichtung aufgenommene Bilder mit Referenzbildern vergleicht.

Besonders bevorzugt weist die Vorrichtung eine erste Bildaufnahmeeinrichtung auf, die mittels klassischer, regelbasierter Methoden der industriellen Bildverarbeitung auswertet.

Besonders bevorzugt weist die Vorrichtung eine erste Bildaufnahmevorrichtung auf, die mittels künstlicher Intelligenz (KI) und insbesondere Deep Learning, basierend auf neuronalen Netzen (Convolutional Neural Networks, CNNs), auswertet.

Besonders bevorzugt weist die Vorrichtung eine zweite Vergleichseinrichtung auf, welche von einer Bildaufnahmeeinrichtung der zweiten Inspektionseinrichtung aufgenommene Bilder mit Referenzbildern vergleicht.

Anhand dieses Vergleichs kann bevorzugt festgestellt werden, ob der jeweilige Kunststoffvorformlinge ordnungsgemäß hergestellt ist.

Bei einer weiteren vorteilhaften Ausführungsforme weist die Inspektionsvorrichtung eine Steuerungseinrichtung auf, welche eine zeitversetzte Ansteuerung unterschiedlicher Bildaufnahmeeinrichtungen der ersten Inspektionseinrichtung und/oder der zweiten Inspektionseinrichtung ermöglicht.

Auf diese Weise kann sichergestellt werden, dass eine Bildaufnahme oder eine Beleuchtung eines Kunststoffvorformlings nicht die Bildaufnahme eines anderen Kunststoffvorformlinge beeinträchtigt.

Bevorzugt werden die ersten Bildaufnahmeeinrichtungen, welche im Wesentlichen quer zur Transportrichtung angeordnet sind, mit einem Zeitversatz größer 50µs ausgelöst.

Die vorliegende Erfindung ist weiterhin auf ein Verfahren zum Behandeln von Kunststoffvorformlingen gerichtet, wobei die Kunststoffvorformlinge dazu geeignet und bestimmt sind, zu Kunststoffbehältnissen umgeformt zu werden, und wobei diese Kunststoffvorformlinge einteilig ausgebildet sind und wenigstens einen Grundkörper und einen an diesem Grundkörper angeordneten Mündungsabschnitt aufweisen.

Dabei stellt eine Herstellungseinrichtung diese Kunststoffvorformlinge her, und eine Transporteinrichtung transportiert die hergestellten Kunststoffvorformlinge entlang eines vorgegebenen Transportpfads.

Weiterhin inspiziert eine erste Inspektionseinrichtung, welche entlang des Transportpfads der Kunststoffvorformlinge angeordnet ist, einen ersten Abschnitt der Kunststoffvorformlinge, wobei diese erste Inspektionseinrichtung wenigstens eine Bildaufnahmeeinrichtung aufweist, welche ein Orts aufgelöstes Bild wenigstens eines Abschnitts und insbesondere des ersten Abschnittes des oder der Kunststoffvorformlinge aufnimmt.

Erfindungsgemäß inspiziert eine zweite Inspektionseinrichtung einen zweiten Abschnitt der Kunststoffvorformlinge, wobei diese zweite Inspektionseinrichtung eine zweite Bildaufnahmeeinrichtung aufweist, welche (wenigstens) ein ortsaufgelöstes Bild wenigstens eines weiteren Abschnitts und bevorzugt dieses zweiten Abschnitts der Kunststoffvorformlinge aufnimmt.

Bevorzugt handelt es sich bei dem ersten Abschnitt der Kunststoffvorformlinge um den Mündungsabschnitt bzw. einen Bereich des Mündungsabschnitts. Besonders bevorzugt handelt es sich bei dem zweiten Abschnitt um einen Abschnitt des Grundkörpers der Kunststoffvorformlinge und insbesondere einen Bodenabschnitt.

Insbesondere handelt es sich bei dem zweiten Abschnitt der Kunststoffvorformlinge um einen Abschnitt, der den sog. Anspritzpunkt der Kunststoffvorformlinge enthält.

Bei einem bevorzugten Verfahren sind die besagten Abschnitte des Kunststoffvorformlings voneinander beanstandet und insbesondere endseitig an dem Kunststoffvorformling angeordnet. Bei einer weiteren vorteilhaften Ausführungsformen transportiert die Transporteinrichtung die Kunststoffvorformlinge in wenigstens zwei unterschiedliche Richtungen.

Bei einem weiteren bevorzugten Verfahren transportiert die Transporteinrichtung die Kunststoffvorformlinge derart, dass diese während des Transports voneinander beabstandet sind.

Bei einem weiteren bevorzugten Verfahren transportiert die Transporteinrichtung wenigstens zeitweise die Kunststoffvorformlinge mit einer Transportgeschwindigkeit, die zwischen 0,1 und 10,0m/s, bevorzugt zwischen 0,25 und 2,5m/s und besonders bevorzugt zwischen 0,5 und 1,5m/s liegt.

Bei einem weiteren bevorzugten Verfahren werden die Kunststoffvorformlinge in zueinander paralleler Ausrichtung transportiert.

Bei einem weiteren bevorzugten Verfahren werden die Kunststoffvorformlinge in einer regelmäßigen und insbesondere gleichen Ausrichtung transportiert. Insbesondere handelt es sich dabei um eine vertikale Anordnung bzw. eine vertikale Ausrichtung. Dies bedeutet, dass eine Längsrichtung der transportierten Kunststoffvorformlinge bevorzugt in der vertikalen Richtung verläuft.

Die vorliegende Erfindung ist weiterhin auf ein Verfahren zum Inspizieren von Kunststoffvorformlingen gerichtet, wobei die Kunststoffvorformlinge dazu geeignet und bestimmt sind, zu Kunststoffbehältnissen umgeformt zu werden, und wobei diese Kunststoffvorformlinge einteilig ausgebildet sind und wenigstens einen Grundkörper und einen an diesem Grundkörper angeordneten Mündungsabschnitt aufweisen, wobei eine Transporteinrichtung die hergestellten Kunststoffvorformlinge entlang eines vorgegebenen Transportpfads transportiert und eine erste Inspektionseinrichtung, welche entlang des Transportpfads angeordnet ist, einen ersten Abschnitt der Kunststoffvorformlinge inspiziert und wobei diese erste Inspektionseinrichtung wenigstens eine Bildaufnahmeeinrichtung aufweist, welche ein Orts aufgelöstes Bild wenigstens eines Abschnitts und bevorzugt des ersten Abschnitts der Kunststoffvorformlinge aufnimmt.

Erfindungsgemäß weist die Anordnung eine zweite Inspektionseinrichtung auf, welche einen zweiten Abschnitt der Kunststoffvorformlinge inspiziert, bei diese zweite Inspektionseinrichtung eine zweite Bildaufnahmeeinrichtung aufweist, welche ein ortsaufgelöstes Bild wenigstens eines weiteren Abschnitts und insbesondere des zweiten Abschnitts des oder der Kunststoffvorformlinge aufnimmt.

Bei einem weiteren bevorzugten Verfahren werden die Kunststoffvorformlinge zur Inspektion beleuchtet und insbesondere aus wenigstens zwei unterschiedliche Richtungen beleuchtet.

Bevorzugt erfolgt dabei wenigstens eine Beleuchtung von oben und insbesondere in Längsrichtung von oben auf die Kunststoffvorformlinge. Bei einen weiteren bevorzugten Verfahren erfolgt auch eine Beleuchtung der Kunststoffvorformlinge von unten und insbesondere in deren Längsrichtung von unten.

Bevorzugt wird zur Inspektion der Kunststoffvorformlinge eine Auflichtinspektion durchgeführt. Besonders bevorzugt wird zur Inspektion der Kunststoffvorformlinge eine Durchlichtinspektion durchgeführt.

Besonders bevorzugt erfolgt eine Bildaufnahme im Rahmen der Inspektion mit der ersten Inspektionseinrichtung in einer Längsrichtung der Kunststoffvorformlinge oder leicht schräg dazu.

Bei einem weiteren bevorzugten Verfahren erfolgt eine Bildaufnahme mit der zweiten Inspektionseinrichtung in der Längsrichtung der Kunststoffvorformlinge.

Bei einem weiteren bevorzugten Verfahren wird ein Anteil der inspizierten Kunststoffvorformlinge zur weiteren Verarbeitung weitergeleitet und insbesondere zu einer Sortiereinrichtung weitergeleitet und insbesondere zu einer Rollensortiereinrichtung weitergeleitet. Bevorzugt wird ein Anteil der Kunststoffvorformlinge ausgeschleust. Hierbei handelt es sich insbesondere um solche Kunststoffvorformlinge, welche als fehlerhaft erkannt worden.

Weitere Vorteile und Ausführungsformen ergeben sich aus der beigefügten Zeichnung. Dabei zeigt:

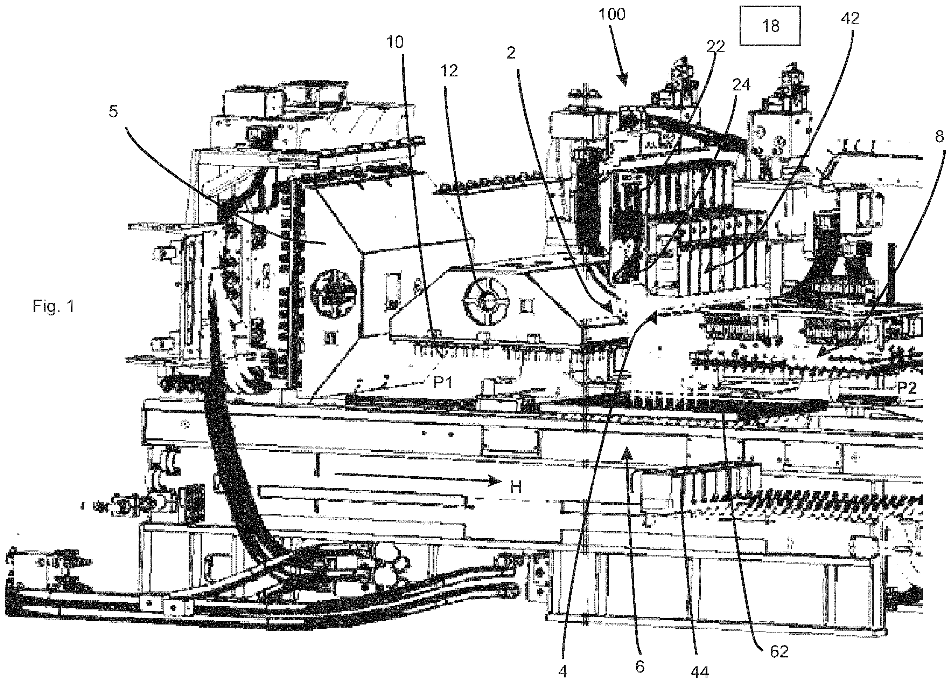

- Fig. 1: eine schematische Darstellung einer erfindungsgemäßen Vorrichtung.

Fig. 1 zeigt eine erfindungsgemäße Anordnung zum Behandeln von Kunststoffvorformlingen 10. Dabei bezieht sich das Bezugszeichen 5 auf eine Herstellungseinrichtung wie insbesondere aber nicht ausschließlich einer Spritzgießmaschine, welche Kunststoffvorformlinge 10 herstellt.

Die hergestellten Kunststoffvorformlinge 10 werden nach ihrer Herstellung - durch eine Nachkühl- und / oder Handlingeinheit 12 transportiert und dort bevorzugt auch gekühlt.

Das Bezugszeichen 6 kennzeichnet in seiner Gesamtheit eine Transporteinrichtung zum Transportieren der Kunststoffvorformlinge. Diese Transporteinrichtung 6 weist eine Halteeinrichtung 62 auf, welche zum Aufnehmen und/oder Halten einer Vielzahl von Kunststoffvorformlingen geeignet und bestimmt ist.

Die Halteeinrichtung ist bevorzugt in der horizontalen Richtung H zwischen zwei Positionen P1 und P2 beweglich.

Daneben ist die Halteeinrichtung 62 in der horizontalen Position P1 auch in der vertikalen Richtung beweglich. Auf diese Weise kann die Halteeinrichtung 62 angehoben und an den Aufnahmeraum 12 herangeführt werden, um von dort eine Vielzahl von Kunststoffvorformlingen 10 aufzunehmen. Zu diesem Zweck weist bevorzugt die Halteeinrichtung eine Vielzahl von Ausnehmungen zum Aufnehmen der Kunststoffvorformlinge auf.

Es wäre dabei möglich, dass Greifeinrichtungen vorgesehen sein, welche die einzelnen Kunststoffvorformlinge an die Halteeinrichtung übergeben.

Von der Position P1 ist die Halteeinrichtung in die Position P2 überführbar. In der Position P2 können Kunststoffvorformlinge an eine weitere Transporteinrichtung ausgegeben werden oder auch ausgeschleust werden.

Bevorzugt handelt es sich bei dieser weiteren Transporteinrichtung (nicht gezeigt) um eine Transporteinrichtung, welche die Kunststoffvorformlinge ungeordnet transportiert.

Das Bezugszeichen 8 kennzeichnet (grob schematisch) eine Ausschleuseeinrichtung, welche dazu geeignet und bestimmt ist, einzelne Kunststoffvorformlinge und insbesondere als fehlerhaft bewertete Kunststoffvorformlinge 10 auszuschleusen.

Das Bezugszeichen 100 kennzeichnet in seiner Gesamtheit eine Inspektionsvorrichtung, die zum Inspizieren der von der Transporteinrichtung 6 transportierten Kunststoffvorformlinge dient.

Diese Inspektionsvorrichtung 100 weist weiterhin eine insgesamt mit 4 bezeichnete zweite Inspektionseinrichtung auf, welche dazu geeignet und bestimmt ist, zweite Abschnitte der Kunststoffvorformlinge zu inspizieren. Diese zweite Inspektionseinrichtung weist wenigstens eine und bevorzugt eine Vielzahl von Bildaufnahmeeinrichtungen 42 wie etwa Kameras auf, welche derart ausgerichtet sind, dass sie ortsaufgelöste Bilder der von der Transporteinrichtung 6 transportierten Kunststoffvorformlinge 10 aufnehmen.

Dabei sind bevorzugt diese zweiten Bildaufnahmeeinrichtungen so angeordnet, dass sie den jeweiligen Transportgassen, in denen die Kunststoffvorformlinge transportiert werden, zugeordnet sind.

Bevorzugt nimmt dabei jede Bildaufnahmeeinrichtung jeweils ein Bild von in genau einer Transportgasse transportierten Kunststoffvorformlingen auf. Es wäre jedoch auch möglich, dass eine Bildaufnahmeeinrichtung jeweils Bilder von mehreren in unterschiedlichen Gassen transportierten Kunststoffvorformlingen aufnimmt.

Das Bezugszeichen 44 kennzeichnet eine (zweite) Beleuchtungseinrichtung, welche ebenfalls ein Bestandteil der zweiten Inspektionseinrichtung 4 ist. Diese Beleuchtungseinrichtung 44 ist dabei hier unterhalb des Transportpfads der Kunststoffvorformlinge 10 angeordnet. Bevorzugt ist diese Beleuchtungseinrichtung 44 dazu geeignet und bestimmt die zweiten Abschnitte der Kunststoffvorformlinge, bei denen es sich insbesondere um Bodenabschnitte handelt, zu beleuchten.

Die oben genannte Steuerungseinrichtung 18 steuert bevorzugt auch die Bildaufnahmeeinrichtungen 42 und insbesondere die Bildaufnahme durch die Bildaufnahmeeinrichtungen. Bevorzugt steuert diese Steuerungseinrichtung auch die Beleuchtungseinrichtung(en) 44.

Besonders bevorzugt steuert die Steuerungseinrichtung die Bildaufnahmen der Kunststoffvorformlinge auch in Abhängigkeit von einer Position der Kunststoffvorformlinge entlang des Transportpfads.

Die Anmelderin behält sich vor sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Anordnung zum Behandeln von Kunststoffvorformlingen (10), wobei die Kunststoffvorformlinge dazu geeignet und bestimmt sind, zu Kunststoffbehältnissen umgeformt zu werden und wobei diese Kunststoffvorformlinge einteilig ausgebildet sind und wenigstens einen Grundkörper und einen an diesem Grundkörper angeordneten Mündungsabschnitt aufweisen, mit einer Herstellungseinrichtung (5) zur Herstellung dieser Kunststoffvorformlinge, mit einer Transporteinrichtung (6), welche dazu geeignet und bestimmt ist, die hergestellten Kunststoffvorformlinge entlang eines vorgegebenen Transportpfads zu transportieren, mit einer ersten Inspektionseinrichtung (2) welche entlang des Transportpfads angeordnet ist, und welche dazu geeignet ist, einen ersten Abschnitt der Kunststoffvorformlinge zu inspizieren, wobei diese erste Inspektionseinrichtung (2) wenigstens eine Bildaufnahmeeinrichtung (22) aufweist, welche dazu geeignet und bestimmt ist, ein ortsaufgelöstes Bild wenigstens dieses ersten Abschnitts der Kunststoffvorformlinge (10) aufzunehmen,
**dadurch gekennzeichnet, dass**
die Anordnung eine zweite Inspektionseinrichtung (4) aufweist, welche dazu geeignet und bestimmt ist, einen zweiten Abschnitt der Kunststoffvorformlinge (10) zu inspizieren, wobei diese zweite Inspektionseinrichtung (4) eine zweite Bildaufnahmeeinrichtung aufweist, welche dazu geeignet und bestimmt ist, ein ortsaufgelöstes Bild wenigstens des zweiten Abschnitts der Kunststoffvorformlinge (10) aufzunehmen.

2. Anordnung nach Anspruch 1,
**dadurch gekennzeichnet, dass**
die Transporteinrichtung (6) eine Halteeinrichtung (62) zum Halten der Kunststoffvorformlinge (10) aufweist, wobei diese Halteeinrichtung (62) dazu geeignet und bestimmt ist, eine Vielzahl von Kunststoffvorformlingen (10) aufzunehmen.

3. Anordnung nach Anspruch 1,
**dadurch gekennzeichnet, dass**
die Transporteinrichtung (6) dazu geeignet und bestimmt ist, die Behältnisse in wenigstens zwei unterschiedlichen Richtungen zu transportieren.

4. Anordnung nach wenigstens einem der vorangegangenen Ansprüche,
**dadurch gekennzeichnet, dass**
die Anordnung eine Ausschleuseeinrichtung aufweist, welche dazu geeignet und bestimmt ist, einzelne Kunststoffvorformlinge in Abhängigkeit von einem Inspektionsergebnis der Inspektion mit der ersten Inspektionseinrichtung oder der zweiten Inspektionseinrichtung auszuschleusen.

5. Inspektionsvorrichtung (100) zum Inspizieren von Kunststoffvorformlingen (10) wobei die Kunststoffvorformlinge (10) dazu geeignet und bestimmt sind, zu Kunststoffbehältnissen umgeformt zu werden und wobei diese Kunststoffvorformlinge (10) einteilig ausgebildet sind und wenigstens einen Grundkörper und einen an diesem Grundkörper angeordneten Mündungsabschnitt aufweisen mit einer Transporteinrichtung (6), welche dazu geeignet und bestimmt ist, die hergestellten Kunststoffvorformlinge (10) entlang eines vorgegebenen Transportpfads zu transportieren, mit einer ersten Inspektionseinrichtung (2) welche entlang des Transportpfads angeordnet ist, und welche dazu geeignet und bestimmt ist, einen ersten Abschnitt der Kunststoffvorformlinge (10) zu inspizieren, wobei diese erste Inspektionseinrichtung (2) wenigstens eine erste Bildaufnahmeeinrichtung (22) aufweist, welche dazu geeignet ist, ein ortsaufgelöstes Bild wenigstens des ersten Abschnitts der Kunststoffvorformlinge (10) aufzunehmen,
**dadurch gekennzeichnet, dass**
die Inspektionsvorrichtung (100) eine zweite Inspektionseinrichtung (4) aufweist, welche dazu geeignet und bestimmt ist, einen zweiten Abschnitt der Kunststoffvorformlinge (10) zu inspizieren, wobei diese zweite Inspektionseinrichtung (4) eine zweite Bildaufnahmeeinrichtung aufweist, welche dazu geeignet und bestimmt ist, ein ortsaufgelöstes Bild wenigstens des zweiten Abschnitts der Kunststoffvorformlinge (10) aufzunehmen.

6. Inspektionsvorrichtung (100) nach dem vorangegangenen Anspruch,
**dadurch gekennzeichnet dass**
die erste Inspektionseinrichtung (2) eine Vielzahl von Bildaufnahmeeinrichtungen (22) aufweist, die jeweils dazu geeignet und bestimmt sind, wenigstens ein Bild wenigstens eines Abschnitts und insbesondere des ersten Abschnitts der von der Transporteinrichtung transportierten Kunststoffvorformlinge (10) aufzunehmen und/oder die zweite Inspektionseinrichtung (4) eine Vielzahl von Bildaufnahmeeinrichtungen (42) aufweist, die jeweils dazu geeignet und bestimmt sind, wenigstens ein Bild wenigstens eines Abschnitts und insbesondere des zweiten Abschnitts der von der Transporteinrichtung (6) transportierten Kunststoffvorformlinge (10) aufzunehmen.

7. Inspektionsvorrichtung (100) nach wenigstens einem der vorangegangenen Ansprüche,
**dadurch gekennzeichnet, dass**
die wenigstens eine Bildaufnahmeeinrichtung (22) der ersten Inspektionseinrichtung (2) oberhalb des Transportpfads der Kunststoffvorformlinge (10) angeordnet ist und/oder die wenigstens eine Bildaufnahmeeinrichtung (42) der zweiten Inspektionseinrichtung (4) oberhalb des Transportpfads der Kunststoffvorformlinge (10) angeordnet ist.

8. Inspektionsvorrichtung (100) nach wenigstens einem der vorangegangenen Ansprüche,
**dadurch gekennzeichnet, dass**
wenigstens eine Inspektionseinrichtung (2, 4) eine Beleuchtungseinrichtung (24, 44) zum Beleuchten der von der Transporteinrichtung (6) transportierten Kunststoffvorformlinge (10) aufweist.

9. Inspektionsvorrichtung (100) nach wenigstens einem der vorangegangenen Ansprüche,
**dadurch gekennzeichnet, dass**
wenigstens eine der ersten Inspektionseinrichtung (2) zugeordnete Beleuchtungseinrichtung (24) oberhalb des Transportpfads der Kunststoffvorformlinge (10) angeordnet ist und wenigstens eine der zweiten Inspektionseinrichtung (4) zugeordnete Beleuchtungseinrichtung (44) unterhalb des Transportpfads der Kunststoffvorformlinge (10) angeordnet ist.

10. Inspektionsvorrichtung (100) nach wenigstens einem der vorangegangenen Ansprüche,
**dadurch gekennzeichnet, dass**
die Inspektionsvorrichtung eine Steuerungseinrichtung (18) aufweist, welche eine zeitversetzte Ansteuerung unterschiedlicher Bildaufnahmeeinrichtungen der ersten Inspektionseinrichtung (2) ermöglicht und/oder die Inspektionsvorrichtung eine Steuerungseinrichtung (18) aufweist, welche eine zeitversetzte Ansteuerung unterschiedlicher Bildaufnahmeeinrichtungen der zweiten Inspektionseinrichtung (2) ermöglicht.

11. Verfahren zum Behandeln von Kunststoffvorformlingen (10), wobei die Kunststoffvorformlinge (10) dazu geeignet und bestimmt sind, zu Kunststoffbehältnissen umgeformt zu werden und wobei diese Kunststoffvorformlinge einteilig ausgebildet sind und wenigstens einen Grundkörper und einen an diesem Grundkörper angeordneten Mündungsabschnitt aufweisen, wobei eine Herstellungseinrichtung diese Kunststoffvorformlinge (10) herstellt, wobei eine Transporteinrichtung (6), die hergestellten Kunststoffvorformlinge (10) entlang eines vorgegebenen Transportpfads transportiert und wobei eine erste Inspektionseinrichtung (2) welche entlang des Transportpfads angeordnet ist, einen ersten Abschnitt der Kunststoffvorformlinge (10) inspiziert, wobei diese erste Inspektionseinrichtung (2) wenigstens eine Bildaufnahmeeinrichtung (22) aufweist, welche ein ortsaufgelöstes Bild wenigstens eines Abschnitts und insbesondere des ersten Abschnitts der Kunststoffvorformlinge (10) aufnimmt, **dadurch gekennzeichnet, dass**
eine zweite Inspektionseinrichtung (4) einen zweiten Abschnitt der Kunststoffvorformlinge (10) inspiziert, wobei diese zweite Inspektionseinrichtung (4) eine zweite Bildaufnahmeeinrichtung aufweist, welche ein ortsaufgelöstes Bild wenigstens eines weiteren Abschnitts und insbesondere des zweiten Abschnitts der Kunststoffvorformlinge (10) aufnimmt.

12. Verfahren nach dem vorangegangenen Anspruch,
**dadurch gekennzeichnet, dass**
die Transporteinrichtung (6) die Kunststoffvorformlinge (10) in wenigstens zwei unterschiedliche Richtungen transportiert und/oder die Transporteinrichtung die Kunststoffvorformlinge mit einer Transportgeschwindigkeit transportiert, die zwischen 0,1 und 10,0m/s, bevorzugt zwischen 0,25 und 2,5m/s und besonders bevorzugt zwischen 0,5 und 1,5m/s liegt.

13. Verfahren nach wenigstens einem der vorangegangenen Ansprüche,
**dadurch gekennzeichnet, dass**
die Kunststoffvorformlinge (10) in zueinander paralleler Ausrichtung transportiert werden und/oder die Kunststoffvorformlinge (10) in einer regelmäßigen Anordnung transportiert werden.

14. Verfahren zum Inspizieren von Kunststoffvorformlingen wobei die Kunststoffvorformlinge dazu geeignet und bestimmt sind, zu Kunststoffbehältnissen umgeformt zu werden und wobei diese Kunststoffvorformlinge einteilig ausgebildet sind und wenigstens einen Grundkörper und einen an diesem Grundkörper angeordneten Mündungsabschnitt aufweisen, wobei eine Transporteinrichtung (6) die hergestellten Kunststoffvorformlinge entlang eines vorgegebenen Transportpfads transportiert, und eine erste Inspektionseinrichtung (2) welche entlang des Transportpfads angeordnet ist, einen ersten Abschnitt der Kunststoffvorformlinge inspiziert, wobei diese erste Inspektionseinrichtung (2) wenigstens eine Bildaufnahmeeinrichtung (22) aufweist, welche ein ortsaufgelöstes Bild des ersten Abschnitts der Kunststoffvorformlinge (10) aufnimmt, **dadurch gekennzeichnet, dass**
die Anordnung eine zweite Inspektionseinrichtung (4) aufweist, welche einen zweiten Abschnitt der Kunststoffvorformlinge (10) inspiziert, wobei diese zweite Inspektionseinrichtung (4) eine zweite Bildaufnahmeeinrichtung aufweist, welche ein ortsaufgelöstes Bild wenigstens des zweiten Abschnitts der Kunststoffvorformlinge (10) aufnimmt.

15. Verfahren nach dem vorangegangenen Anspruch,
**dadurch gekennzeichnet, dass**
die Kunststoffvorformlinge (10) aus wenigstens zwei unterschiedlichen Richtungen beleuchtet werden.
